# EUROPEAN PATENT APPLICATION

(11) **EP 1 508 709 A2**
(43) Date of publication of application: **23.02.2005**
(21) Application number: 04103927.2
(22) Date of filing: 16.08.2004
(51) Int. Cl.: F16C 35/063, F16D 1/09

(54) **Method and device for measuring bearing ring strain during mounting**

(30) Priority: 19.08.2003 SE 0302239
(71) Applicant: Aktiebolaget SKF, S-415 50 Gothenburg (SE)
(72) Inventor: Falk, Johan, 431 64 Mölndal (SE); Lidström, Annika, 411 39 Göteborg (SE)
(74) Representative: Westman, Per Börje Ingemar

(57) **Abstract**

The invention refers to a method and a device for integrated cable signal adjustment, when mounting a bearing with a taper bore on a shaft, whereby the strain is measured at the bearing ring as the bearing ring is driven up axially on the shaft, and the instantaneous clearance, reduction in the bearing is calculated on basis of the measured strain, and using the reduction of the internal bearing clearance for determining the amount the bearing shall be driven along the shaft, that for compensating a systematic measurement error in form of a too high measurement result appearing when the strain measurement takes place on the side face of the bearing ring instead of on the inner envelope surface thereof, a compensating device (17) is connected in a cable (16) between a sensor (15) fitted to the point of measurement and an indicator displaying the measurement result, and that the compensating device (17) is caused to lower the measurement signal before reaching the indicator, with a factor corresponding to the measurement error.

## Description

### Background of the invention

The present invention refers to a method and a device for integrated cable signal adjustment for compensating predictable or systematic measurement errors particularly during mounting of a bearing on a shaft.

When mounting rolling bearings, and particularly at mounting on tapered seats, there is a requirement that the bearing must be mounted with interference fit on shaft or adapter sleeve. For ascertaining that the bearing ring is driven up a required distance, it has earlier been suggested by EP 0 688 967 B1 a method wherein the strain is measured at least at one side face of the bearing during the time the ring is driven up axially, and the instantaneous clearance reduction in the bearing is calculated, whereby this clearance reduction is used for determining the distance the bearing shall be driven up along the shaft.

The strain is measured by means of a sensor, preferably in the form of a strain gauge and the signals representing the changes in strain in the bearing ring are supplied via a cable to a calculator arranged to calculate on basis of the known initial clearance and the signals from the sensor, the instantaneous nominal clearance reduction and the value of said initial clearance, which is shown on a display. This combined calculator and display is often a hand-held indicator.

During development of this method it has been chosen a simplification where a larger systematic error is accepted due to geometrical factors. According to this simplification the same compensation factor is used independent of which bearing is to be mounted.

However different types of bearings will not permit mounting of the sensor on the side face and for this reason it is used either side-mounted sensors or top-mounted sensors, i.e. in the area of the outer envelope surface of the inner bearing ring axially outside the race tracks for the rolling bodies.

Extensive tests have shown that there is a systematic error which gives a value deviating with 6 to 7% between measurements with the two different locations of the sensors, whereby the side face location will give a higher value. The difference is dependent on the fact that the measurement takes place nearer to the shaft, whereas about half the difference has to be attributed to other edge effects. The dispersion error is also bigger at a sensor mounted at the side face.

When using the described method at mounting a bearing where the sensor is positioned on the side face of the bearing ring, this error will give a too lose fit of the bearing, which can lead to a premature bearing failure. Such a bearing failure can give extensive economical losses and even cause loss of human lives.

It is certainly possible to make manual settings in the indicator from a technical point of view, but such a solution incorporates an increased risk for human errors. From a safety point of view it is therefore desirable to have an uncomplicated method which does not require any manual settings, for eliminating the risk for errors caused by inadvertent handling of the equipment.

The purpose of the present invention is to provide a simple method and a device for compensating the systematic error in measuring results caused in the manner described above, in a manner with reduced risk for incorrect handling.

The compensation required is that the 6 or 7 % deviation between the values at measurement with top-mounted sensor and with side-mounted sensor is reduced.

A possibility would of course be to arrange for an individual setting in the indicator for different bearing types, and particularly for different positions of fitting the sensor to the bearing, but this is a solution, which is not applicable with the indicators at present in use, and such a solution would also most likely cause a cost increase.

The purpose of the present invention is to provide a method and a device for managing to compensate such a systematic measurement error in a simple and cost efficient manner, with only marginal cost increase, and this has been achieved with a method as claimed in the accompanying claim 1, and with aid of a device as claimed in the accompanying claim 5.

Hereinafter the invention will be further described with reference to a non-restricting embodiment schematically illustrated in the accompanying drawings.
Fig. 1 shows in perspective a portion of a spherical roller bearing, under a mounting sequence with use of the earlier known method and equipment.
Fig. 2 is a cross sectional view of a part of a toroidal roller bearing.
Figs. 3 and 4 illustrate in perspective and in a planar view a device according to the present invention.

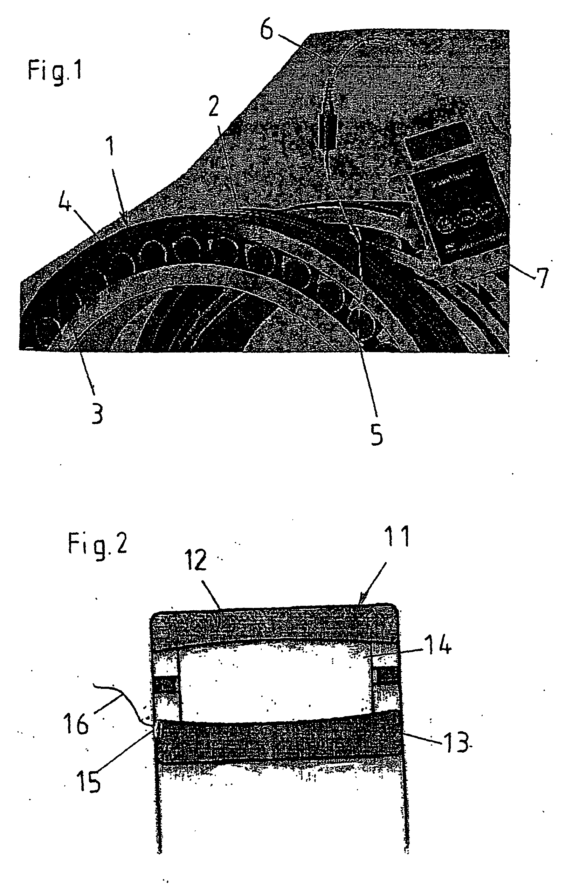

In Fig. 1 is illustrated in perspective a portion of a spherical roller bearing 1, having an outer race ring 2 and an inner race ring 3 and a plurality of spherical rollers 4 arranged between the outer and inner rings. The spherical configuration permits the outer race ring 2 to make angular movements relative to the rollers, by which misalignment can be compensated. However, the positions of the rollers 4 are substantially constant in relation to the inner race ring 4, and for this reason it is possible to fit a sensor 5 on the land of the race ring, i.e. in the area outside the portion of the inner envelope surface of the inner race ring, which is occupied by the rollers. The sensor 5 is connected via a cable 6 with an indicator 7, which continuously during the mounting procedure on its display shows a value representing the current internal clearance reduction divided by the bore diameter. The indicator is adapted to show a correct value, when the sensor 5 is fitted to the inner race ring in the manner described, i.e. mounted on the inner envelope surface of the inner ring 3.

In Fig. 2 is shown a cross section of a part of a toroidal bearing 11, having an outer race ring 12, an inner race ring 13 and toroidal rollers 14 positioned between the rings 12, 13. A bearing of this type as known performs in another manner than the spherical roller bearing, as its race rings 12, 13 and its rollers 14 have an ability of moving relative to each other both angularly and also axially. This means that there is not space for mounting a sensor on the inner envelope surface of the inner ring, as the rollers can move axially along the entire axial extension of the inner race ring. As schematically illustrated, the sensor 15 instead has been fitted on the side face of the inner race ring, where it can also measure the variation in strain in the ring during mounting of the bearing 11, and which via a cable 16 transfers signals representative for the strain in the bearing ring to a not shown indicator.

As mentioned above, such a difference in the position of the sensor will give a measurement value, which value is 6 to 7 % higher than that of the top-mounted sensor 5, and if the operator mounting the bearing therefore should use the value shown in the indicator, in the same manner as when the sensor was top-mounted, the bearing should have a too loose fit for the bearing.

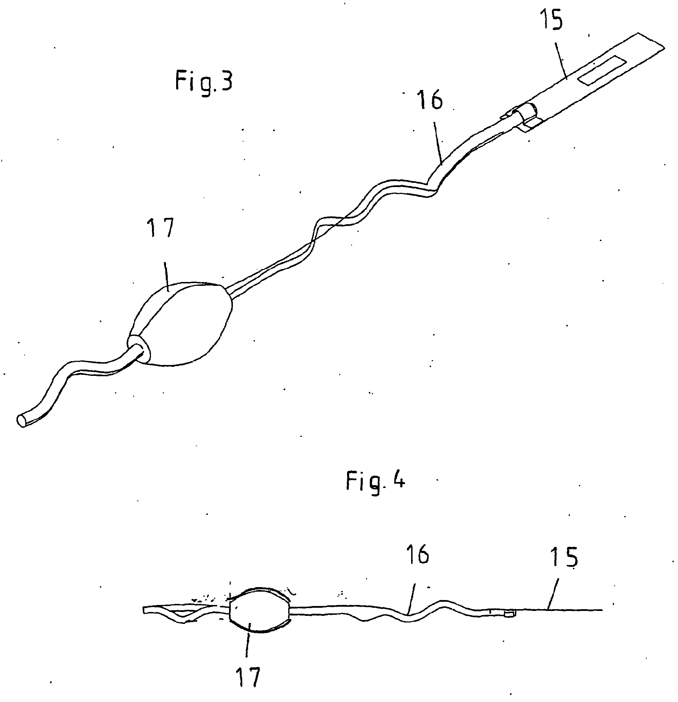

In Fig. 3 is shown in a perspective view and in Fig. 4 in a planar view, a sensor 15, which is preferably a thin foil equipped with strain gauges (not visible). The sensor is attached to a signal cable 16, which is intended to be connected to and deliver signals representative for the current strain in the bearing ring 13 to an indicator not shown but of the same type as the one illustrated in Fig. 1.

In the cable 16 there is provided a compensating device 17, arranged to lower the signal for the side-face-mounted sensor 15 as compared to the top-mounted sensor 5, with a value corresponding to the 6 - 7 %, which according to the above mentioned tests has been found to be a systematic error between the two different mounting manners.

Thus the compensation required is effected not in the sensor 15 and not in the indicator connected thereto via the cable 16, but in the cable itself.

Use of passive components is preferred, but to provide a resistor in parallel with the strain gauge will cause a non-linearity and a complete displacement of the basic resistance.

However, it has proven itself that a structure consisting of one resistor connected in series and one resistor connected in shunt will give a structure consisting only of passive components and which is substantially linear in the area where the strain gauge is working.

This compensating device 17 consisting of one resistor in series and one resistor in parallel, is enclosed in a plastic casing, e.g, by moulding, which is therefore made integral with the sensor 15 and the cable 16, and which therefore can not be altered by the user. For protecting it from oil and contaminations during production and transport, the device can be enclosed in a shrink film package.
The basic resistance of the strain gauge is about 350 Ω, and the variation within the range used here is at most about 0.8 Ω. The reduction of interest is between about 5% to 15%, particularly about 7%, and this corresponds to a parallel resistance of between 10000 Ω and 20000 Ω, and this range is very favourable from a linearity aspect.

With the method and the device as described it is obtained a compensation factor adapted to each specific bearing, and the mounting procedure will become safe, even if the mounting is made by personnel which are not experts, as the indicator will display the actual values of the clearance reduction.

The invention is not limited to the embodiments illustrated and described, but modifications and variants are possible within the scope of the accompanying claims.

## Claims

1. A method for integrated cable signal adjustment when mounting a bearing (11) with a taper bore on a shaft, whereby the strain is measured at the bearing ring (13) as the bearing ring is driven up axially on the shaft, and the instantaneous clearance reduction in the bearing is calculated on basis of the measured strain, and using the reduction of the internal bearing clearance for determining the amount the bearing shall be driven along the shaft,
**characterized therein**,
that for compensating a systematic measurement error in form of a too high measurement result appearing when the strain measurement takes place on the side face of the bearing ring (11) instead of on the inner envelope surface thereof,
a compensating device (17) is connected in a cable (16) between a sensor (15) fitted to the point of measurement and an indicator displaying the measurement result,
and that the compensating device (17) is caused to lower the measurement signal before reaching the indicator, with a factor corresponding to the measurement error.

2. A method as claimed in claim 1,
**characterized therein**,
that as a compensating device (17) is used passive electric components.

3. A method as claimed in claim 2,
**characterized therein**,
that as the passive electric components are used resistors.

4. A method as claimed in claim 3,
**characterized therein**,
that it is used at least one resistor connected in series and at least one resistor connected in parallel.

5. A device for integrated cable signal adjustment when mounting a bearing (11) with a taper bore on a shaft, whereby the strain is measured at the bearing ring (13) as the bearing ring is driven up axially on the shaft, and the instantaneous clearance reduction in the bearing is calculated on basis of the measured strain, and using the reduction of the internal bearing clearance for determining the amount the bearing shall be driven along the shaft, which device incorporates a sensor (15) for fitting to the bearing inner race ring (13), a cable (16) extending from the sensor to an indicator with a display for displaying the results of the measurement,
**characterized therein**,
that in the cable (16) is connected a compensating device (17) adapted to lower the signals reaching the indicator for compensating a signal deviation caused by a fitting of the sensor (15), at a position on the side face of the bearing ring (13) instead of on the outer envelope surface thereof.

6. A device as claimed in claim 5,
**characterized therein**
that the compensating device (17) incorporates passive electric components in form of resistors.

7. A device as claimed in claim 6,
**characterized therein**
that one of the resistors is connected in series with the sensor components, whereas the other is connected in parallel therewith.

8. A device as claimed in anyone of claims 5-7,
**characterized therein**
that the compensating device (17) is enclosed in a casing, preferably of plastic material.
